# EUROPEAN PATENT SPECIFICATION

(11) **EP 4 537 461 B1**
(45) Date of publication and mention of the grant of the patent: **23.09.2026**
(21) Application number: 22733913.2
(22) Date of filing: 07.06.2022
(51) Int. Cl.: H04B 7/0413, H04B 17/21

(54) **CHANNEL DRIFT ESTIMATION IN D-MIMO NETWORKS**
KANALDRIFTSCHÄTZUNG IN D-MIMO-NETZWERKEN
ESTIMATION DE DÉRIVE DE CANAL DANS DES RÉSEAUX D-MIMO

(43) Date of publication of application: 16.04.2025
(73) Proprietor: Telefonaktiebolaget LM Ericsson (publ), 164 83 Stockholm (SE)
(72) Inventor: VIEIRA, Joao, 245 63 HJÄRUP (SE); FRENGER, Pål, 582 27 LINKÖPING (SE); LARSSON, Erik G., 586 63 LINKÖPING (SE)
(74) Representative: Ericsson
(86) International application number: PCT/EP2022/065325
(87) International publication number: WO 2023/237181

(56) References cited:
- WO-A1-2014/039098
- WO-A1-2021/011198
- ROGALIN R ET AL: "Hardware-impairment compensation for enabling distributed large-scale MIMO", INFORMATION THEORY AND APPLICATIONS WORKSHOP (ITA), 2013, IEEE, 10 February 2013 (2013-02-10), pages 1 - 10, XP032425940, ISBN: 978-1-4673-4648-1, DOI: 10.1109/ITA.2013.6502966
- ROGALIN R ET AL: "Scalable Synchronization and Reciprocity Calibration for Distributed Multiuser MIMO", IEEE TRANSACTIONS ON WIRELESS COMMUNICATIONS, IEEE SERVICE CENTER, PISCATAWAY, NJ, US, vol. 13, no. 4, 1 April 2014 (2014-04-01), pages 1815 - 1831, XP011546291, ISSN: 1536-1276, [retrieved on 20140421], DOI: 10.1109/TWC.2014.030314.130474
- HSU JEN YUAN ET AL: "Channel calibration for network MIMO systems", 2017 IEEE 13TH INTERNATIONAL COLLOQUIUM ON SIGNAL PROCESSING & ITS APPLICATIONS (CSPA), IEEE, 10 March 2017 (2017-03-10), pages 89 - 93, XP033163951, DOI: 10.1109/CSPA.2017.8064930

## Description

The project leading to this application has received funding from the European Union's Horizon 2020 research and innovation programme under grant agreement No 101013425.

### TECHNICAL FIELD

Embodiments presented herein relate to a method, a centralized node, a computer program, and a computer program product for estimating channel drift between a plurality of access points in a distributed multiple input multiple output network.

### BACKGROUND

In general terms, distributed massive multiple input multiple output (D-MIMO), also known as cell-free massive MIMO, is technology which relies on phase-coherent operation of large numbers of antennas elements that are distributed over a large geographical area. Two example D-MIMO implementations are so-called RadioStripes (with antennas elements disposed along a cable) and large intelligent surfaces (or RadioWeaves, with antennas elements integrated into walls and other objects). It is also foreseen that practical D-MIMO systems will be built of multiple access points (APs), or panels, that each comprises multiple antennas elements, and where the APs are interconnected with one another and with a centralized node.

Channel state information required for joint coherent transmissions in the downlink (i.e., from the APs at the network-side towards the user equipment (UE) at the user-side) is preferably derived from uplink channel soundings, where channel reciprocity is assumed. Uplink channel sounding involves the UE to transmit uplink reference signals towards the APs, where the APs then perform measurements on the received uplink reference signals. This operation mode is typically referred to as reciprocity-based operation, and one benefit is that much smaller training overhead is needed to learn the downlink channel state information (CSI) compared to performing a full downlink beam sweep (plus feedback of the measured downlink signals/channels to the APs). During the downlink beam sweep the APs transmit downlink reference signals in different directional beams towards the UE and the UE perform measurements on the received downlink reference signals and then report back the measurements to the APs.

The preferred operation is in time-division duplexing mode since it is the duplex mode in which it is easier, and more beneficial, to exploit uplink-downlink reciprocity. However, even though the propagation channel between an AP and a UE is reciprocal, the presence of the analog front-end circuitry in the radio transceivers of the APs and UEs complicates the situation and makes the baseband-to-baseband channel non-reciprocal. Hence, in order to make use of the reciprocity assumption and rely on the uplink reference signals to compute downlink precoding coefficients, the non-reciprocal transceiver responses need to be calibrated.

One calibration approach that is suitable to restore reciprocity of a wireless link and enable reciprocity-based operation, is such that the entire calibration procedure is conducted solely at the network-side (i.e., involving the APs and the centralized node). In such an approach, calibration coefficients can be obtained via over-the-air (OTA) measurements solely at the APs. Since only the network-side of the wireless link participates in the calibration procedure, this approach can only ensure a certain degree of reciprocity calibration but has the advantage of not involving the UEs in the calibration process. One advantage, compared to traditional cable-based calibration approaches, is that it bypasses the need for dedicated networks, or cables, for inter-AP calibration.

Next will be described what type of calibration weights (also known as calibration coefficients) needs to be estimated in order for a D-MIMO network to operate under the reciprocity assumption. Then will be described how to estimate the calibration weights.

For illustrative, but non-limiting purposes, assume a narrowband MIMO link with *M* antenna ports at one end, and *K* antenna ports on the other end. Denote by Side A the end of the wireless link with *M* antenna ports and denote by Side B the end of the wireless link with *K* antenna ports.

Side A might be represented by the network-side, for example by *M* APs where each AP comprises a single antenna element, or single transceiver, and each AP is geographically distributed. However, concept disclosed in the present disclosure holds also for the case of several transceivers per AP. Side B might be represented by the user-side, e.g., by *K* single-antenna UEs, one *K*-antenna UE, or a mix of the previous two situations, but where the total number of antenna ports still is *K.*

Assuming a noiseless channel for the moment, the *M* × *K* uplink narrowband radio channel ***H**_{UL}*, representing e.g., an orthogonal frequency division multiplexing (OFDM) subcarrier or physical resource block (PRB), is modelled as ${H}_{UL} = {R}_{AP} H {T}_{UE} .$

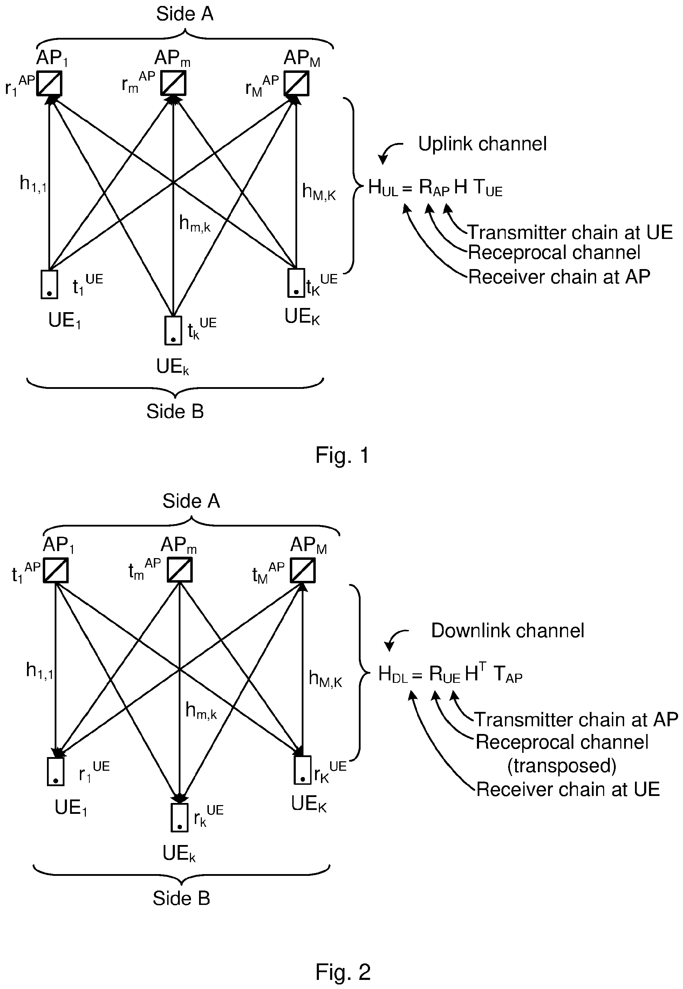

Here, ***H*** is a matrix comprising all channels effects occurring between the transmitter and receiver chains. For example, in fully digital beamforming systems, the channel matrix ***H*** typically denotes the propagation channel. The matrix ${T}_{UE} = diag \left\{{t}_{1}^{UE},…,{t}_{K}^{UE}\right\}$ is a diagonal matrix where each diagonal entry models the complex gain of the transmitter chain of each UE, and ${R}_{AP} = diag \left\{{r}_{1}^{AP},…,{r}_{M}^{AP}\right\}$ is a diagonal matrix where each diagonal entry models the complex gain of the receiver chain of each AP. An example D-MIMO network with a single antenna port per AP (e.g., using single polarization) in accordance with Equation (1) is illustrated in **Fig. 1** illustrating *M* APs, denoted AP₁, APₘ, ..., AP_{M}, at Side A and *K* UEs, denoted UE₁, UEₖ, ..., UE_{K}, at Side B.

Within the same time/frequency coherence interval, the associated downlink channel is given by ${H}_{DL} = {R}_{UE} {H}^{T} {T}_{AP} .$

Here, (.)*^{T}* denotes the matrix transpose operator, and the diagonal entries of ${T}_{AP} = diag \left\{{t}_{1}^{AP},…,{t}_{M}^{AP}\right\}$ and ${R}_{UE} = diag \left\{{r}_{1}^{UE},…,{r}_{K}^{UE}\right\}$ model the associated transmitter and receiver gains of each UE and each AP, respectively. An example D-MIMO network with a single antenna port per AP (e.g., single polarization) in accordance with Equation (2) is illustrated in **Fig. 2****,** which as in Fig. 1 illustrates *M* APs, denoted AP₁, APₘ, ..., AP_{M}, at Side A and *K* UEs, denoted UE₁, UEₖ, ..., UE_{K}, at Side B.

The matrix ***H*** is here assumed to be reciprocal. However, the end-to-end baseband channel is not reciprocal, i.e., ${H}_{UL} \neq {H}_{DL}^{T}$. This is because the gains of the transceiver circuitries are not reciprocal in general (e.g., ***R**_{AP}* ≠ ***T**_{AP}*). Due to this non-reciprocity aspect, it is not immediately obvious how coherent downlink transmissions can be performed based on channel estimates obtained from uplink reference signals.

To indicate how to address this challenge with the non-reciprocal transceiver terms, it is for now assumed that the network-side of the link has knowledge of the following matrix $C = diag \left\{{c}_{1},…,{c}_{M}\right\} = {T}_{AP} {\left({R}_{AP}\right)}^{- 1} ,$ up to a non-zero complex-valued unknown scaling term *α*. For reasons explained below, the matrix ***C*** will hereinafter be denoted a calibration matrix. However, it is noted that, in practice the value of the matrix ***C*** will be unknown *α priori* and hence needs to be estimated.

Via uplink reference signals, the APs (or the centralized node) can estimate ***H**_{UL}.* If e.g., joint zero-forcing transmissions is to be performed by the APs towards the UEs, the Moore-Penrose inverse ***P*** of ${H}_{UL}^{T}$, namely $P = {H}_{UL}^{∗} {\left({H}_{UL}^{T} {H}_{UL}^{∗}\right)}^{- 1} ,$ needs to be determined. The notation (.)* denotes element-wise complex conjugation. However, since the matrix ***P*** was computed via uplink reference signals, it cannot be directly used as a downlink precoder since it is not matched to the (non-reciprocal) downlink channel ***H**_{DL}.* To solve this, for each AP the pre-coded signals is multiplied with the associated entry of (*αC*)⁻¹*.* More specifically, the pre-coded signal at transceiver *m* is multiplied with 1/(*αcₘ*)*,* where 1 ≤ *m* ≤ *M*. With that, the effective downlink channel ***H'**_{DL}* can be expressed as: $\begin{matrix}H {′}_{DL} = {H}_{DL} {α}^{- 1} {C}^{- 1} P \\ = {H}_{DL} {α}^{- 1} {C}^{- 1} {H}_{UL}^{∗} {\left({H}_{UL}^{T}{H}_{UL}^{∗}\right)}^{- 1} \\ = {H}_{DL} {α}^{- 1} {C}^{- 1} {R}_{AP}^{∗} {H}^{∗} {T}_{UE}^{∗} {\left({T}_{UE}{H}^{T}{\left|{R}_{AP}\right|}^{2}{H}^{∗}{T}_{UE}^{∗}\right)}^{- 1} \\ = {H}_{DL} {α}^{- 1} {T}_{AP}^{- 1} {\left|{R}_{AP}\right|}^{2} {H}^{∗} {T}_{UE}^{∗} {\left({T}_{UE}{H}^{T}{\left|{R}_{AP}\right|}^{2}{H}^{∗}{T}_{UE}^{∗}\right)}^{- 1} \\ = {H}_{DL} {α}^{- 1} {\left({T}_{AP}\right)}^{- 1} {\left({H}^{T}\right)}^{†} {\left({T}_{UE}\right)}^{- 1} \\ = {α}^{- 1} {R}_{UE} {H}^{T} {T}_{AP} {\left({T}_{AP}\right)}^{- 1} {\left({H}^{T}\right)}^{†} {\left({T}_{UE}\right)}^{- 1} \\ = {α}^{- 1} {R}_{UE} {\left({T}_{UE}\right)}^{- 1} ,\end{matrix}$

Here, ***H'**_{DL}* is a diagonal channel matrix with unknown diagonal entries, implying that multi-user interference-free downlink transmission is possible under the current calibration approach. The operator (.)^{†} denotes the Moore-Penrose inverse, and |. |² denotes element-wise squared absolute value.

The unknown diagonal entries of ***H'**_{DL}* can be estimated in the downlink using only one downlink reference signal, which is beamformed in the downlink towards all UEs, using the calibrated channels. Thus, *K* uplink reference signals (one per UE) plus one downlink reference signal are sufficient to conduct all training needed for this type of calibrated reciprocity-based transmissions. This results in much less training overhead compared to explicit downlink channel estimation.

In conclusion, knowledge of the matrix ***C*** allows coherent downlink transmissions, e.g., zero-forcing downlink transmissions (or matched filter-based transmissions), with no (or very little) inter-user interference over what is effectively a calibrated uplink/downlink channel setup.

The matrix ***C*** can therefore be regarded as a calibration matrix. But as noted above, the diagonal elements of this matrix are unknown *a priori,* and thus estimating these diagonal entries up to a non-zero complex-valued unknown scaling term, i.e., the reciprocity calibration coefficients, is of interest.

One approach to estimate the calibration coefficients in a D-MIMO network is described in the paper R. Rogalin et al., "Scalable Synchronization and Reciprocity Calibration for Distributed Multiuser MIMO," in IEEE Transactions on Wireless Communications, vol. 13, no. 4, pp. 1815-1831, April 2014. In summary, the approach involves sounding the *M* AP transceivers one-by-one, in a pre-defined order, by transmitting a sounding signal from each transceiver and receiving on the other *M* - 1 silent transceivers. This can also be thought of as antenna sweeping. Such approach provides *M*² *- M* measurements, or $\frac{{M}^{2} - M}{2}$ bi-directional measurements, to estimate the *M* diagonal entries of the matrix ***C**.*

As described above, a scaled version of the calibration matrix ***C*** = diag{***c***₁, ... , *c_{M}*} *= **T**_{AP}*(***R**_{AP}*)⁻¹, is required for reciprocity calibration. One example of the scaling factor *α* is *α =* 1/*c*₁, which provides the following calibration matrix: $\frac{1}{{c}_{1}} C = diag \left\{1,\frac{{c}_{2}}{{c}_{1}}…,\frac{{c}_{M}}{{c}_{1}}\right\} .$

One way to estimate the diagonal elements of the calibration matrix in Equation (4) is via a sub-case of the general calibration approach described in the above referenced paper entitled "Scalable Synchronization and Reciprocity Calibration for Distributed Multiuser MIMO". This sub-case consists of only performing bi-directional measurements between one reference AP, say AP1, and the other APs, such as AP2, AP3, etc. For example, assuming that AP1 is to be calibrated with respect to another AP, e.g., AP2, then a bi-directional measurement involving AP1 and AP2 are performed. A noise-free version of such a bi-directional measurement can be written as ${y}_{2 , 1} = {r}_{2} {h}_{2 , 1} {t}_{1} and {y}_{1 , 2} = {r}_{1} {h}_{1 , 2} {t}_{2} .$

Assuming that the two measurements *y*_{2,1} and *y*_{1,2}, which jointly constitute one bi-directional measurement, are performed within a time much smaller than the coherence time of the channel, then the propagation channel is reciprocal, i.e., *h*_{2,1} = *h*_{1,2}. More specifically, this implies that the instantaneous amplitude and phase of the propagation channels *h*_{2,1} and *h*_{1,2} is the same during both measurements. With that, the calibration coefficients for AP1 can be set to 1 and the calibration coefficient of AP2 can be computed by dividing the two measurements as $\frac{{y}_{1 , 2}}{{y}_{2 , 1}} = \frac{{r}_{1} {h}_{1 , 2} {t}_{2}}{{r}_{2} {h}_{2 , 1} {t}_{1}}$ $\begin{matrix}= \frac{{r}_{1} {t}_{2}}{{r}_{2} {t}_{1}} \\ = \frac{{c}_{2}}{{c}_{1}}\end{matrix}$ which equals the second diagonal entry of the example calibration matrix in Equation (4), thus achieving calibration.

The requirement on channel invariance, i.e., *h*_{1,2} = *h*_{2,1}, during a bi-directional measurement is thus essential for solving the calibration problem. Otherwise Equation (5) does not equal Equation (6).

Existing techniques for OTA reciprocity calibration have been developed in the context of co-located antenna arrays. These techniques rely on exchanging signals between nearby co-located antennas. The channel between nearby co-located antennas is typically dominated by mutual coupling which is a time-invariant phenomenon. As a result, channel variability during calibration measurements is not considered a main obstacle, and thus not accounted for, in calibration of co-located arrays. The same is true for the above referenced paper entitled "Scalable Synchronization and Reciprocity Calibration for Distributed Multiuser MIMO".

However, channels between (distributed) APs can exhibit a time-variant behavior. This is because, during calibration measurements, especially in urban environments, there may exist large scattering objects moving across the environment, such as cars or trains, and/or the APs can be moved, or be moving, as well. If enough time passes between the two measurements that jointly constitute one bi-directional measurement, the propagation channel drifts and hence *h*_{1,2} ≠ *h*_{2,1} in Equation (5).

An example that illustrates the negative impact of channel time variance during calibration follows. In the worst-case scenario, the time it takes for the propagation channel at a 6GHz carrier frequency to rotate by $10 ° = \frac{2 π}{36}$ rad in a channel made out of one single path, such path being reflected by an object moving at 50 km/h = 13.9 m/s, is $\left(\frac{λ}{36}\right) / 13.9 ≅ 100 μs$, where *λ* is the carrier wavelength. Under the antenna sweeping approach in the above referenced paper entitled "Scalable Synchronization and Reciprocity Calibration for Distributed Multiuser MIMO", if the above 10° phase drift assumption is used for all antenna pairs of the network, this would require that all calibration measurements are executed within a time smaller than 100 µs, so that none of the (*M*² - *M*)/2 bi-directional measurements suffer from a 10° phase drift. This might make it infeasible to calibrate large-scale D-MIMO networks since the time duration of one reference symbol is a significant fraction of 100 µs (and there may also exist empty symbols between calibration signaling transmitted from different APs). Moreover, from Equations (5) and (6) it follows that a 10° drift in the propagation channel during calibration measurements results in a 10° error in the computation of the calibration coefficient. In this respect, a 10° error in the beamforming coefficients might be considered intolerable for multi-user interference cancelation techniques.

WO2021011198A1 describes systems and methods for calibrating TDD MIMO wireless communication systems by dividing antennas into groups, exchanging reference signals, and jointly processing channel estimates to generate calibration coefficients that compensate for differences between transmit and receive signal paths. WO2014039098A1 relates to a method for calibrating transceivers within a wireless device or base station by using internal pilot transmissions and observations between transceiver pairs. Rogalin, Ryan, et al. "Hardware-impairment compensation for enabling distributed large-scale MIMO." 2013 Information Theory and Applications Workshop (ITA). IEEE, 2013 shows calibration techniques to enable TDD-based reciprocity in distributed multiuser MIMO systems using inexpensive, non-self-calibrating hardware. J. Y. Hsu, D. R. Hsieh, J. M. Chen, M. C. Lin and C. P. Chen, "Channel calibration for network MIMO systems," 2017 IEEE 13th International Colloquium on Signal Processing & its Applications (CSPA), Penang, Malaysia, 2017, pp. 89-93, proposes a calibration scheme for time-division duplex network MIMO systems that accounts for residual carrier frequency offsets between base stations by introducing a reference antenna and a coordination server to perform internal calibration without user equipment involvement.

This time-variant issue is further exacerbated for D-MIMO networks operating at high frequency bands. This is true since the Doppler effect scales with carrier frequency.

### SUMMARY

An object of embodiments herein is to address the above issues.

According to a first aspect there is presented a method for estimating channel drift between a plurality of APs in a D-MIMO network. The method is performed by a centralized node in the D-MIMO network. The method comprises instructing the plurality of APs to perform bi-directional sounding for the centralized node to obtain measurements on reference signals for calibration by wirelessly exchanging the reference signals for calibration with each other. Each of the plurality of APs is instructed to wirelessly transmit a first respective reference signal for calibration. At least a first AP of the plurality of APs is instructed to wirelessly transmit a second respective reference signal for calibration. The method comprises estimating the channel drift from measurements made on the first respective reference signal as transmitted by the first AP and received by a second AP of the plurality APs and on the second respective reference signal as transmitted by the first AP and received by the second AP. The method also comprises performing channel drift compensation to calibrate the APs (110a:110K) based on bi-directional measurements made during the bi-directional sounding on the exchanged reference signals and on the estimated channel drift.

According to a second aspect there is presented a centralized node for estimating channel drift between a plurality of APs in a D-MIMO network. The centralized node comprises processing circuitry. The processing circuitry is configured to cause the centralized node to instruct the plurality of APs to perform bi-directional sounding for the centralized node to obtain measurements on reference signals for calibration by wirelessly exchanging the reference signals for calibration with each other. Each of the plurality of APs is instructed to wirelessly transmit a first respective reference signal for calibration. At least a first AP of the plurality of APs is instructed to wirelessly transmit a second respective reference signal for calibration. The processing circuitry is configured to cause the centralized node to estimate the channel drift from measurements made on the first respective reference signal as transmitted by the first AP and received by a second AP of the plurality APs and on the second respective reference signal as transmitted by the first AP and received by the second AP. The processing circuitry is also configured to perform channel drift compensation to calibrate the APs (110a:110K) based on bi-directional measurements made during the bi-directional sounding on the exchanged reference signals and on the estimated channel drift.

According to a third aspect there is presented a computer program for estimating channel drift between a plurality of APs in a D-MIMO network, the computer program comprising computer program code which, when run on a centralized node, causes the centralized node to perform a method according to the first aspect.

According to a fourth aspect there is presented a computer program product comprising a computer program according to the fourth aspect and a computer readable storage medium on which the computer program is stored. The computer readable storage medium could be a non-transitory computer readable storage medium.

Advantageously, these aspects enable compensation for, and minimization of, the impact of propagation channel drifts during bi-directional calibration measurements.

This, in turn, results in more accurate estimate of calibration coefficients.

This, in turn, enables reciprocity-based calibration, beamforming, etc. with high accuracy, which is required, for example, for multi-user interference cancelation schemes, such as zero-forcing transmissions.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, action, etc." are to be interpreted openly as referring to at least one instance of the element, apparatus, component, means, module, action, etc., unless explicitly stated otherwise. The actions of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 schematically illustrates M APs and K UEs involved in uplink channel sounding according to an example;
Fig. 2 schematically illustrates M APs and K UEs involved in downlink channel sounding according to an example;
Fig. 3 is a schematic diagram illustrating a communications network according to embodiments;
Figs. 4 and 5 are flowcharts of methods according to embodiments;
Fig. 6 is a schematic diagram showing functional units of a centralized node according to an embodiment;
Fig. 7 is a schematic diagram showing functional modules of a centralized node according to an embodiment; and
Fig. 8 shows one example of a computer program product comprising computer readable storage medium according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any action or feature illustrated by dashed lines should be regarded as optional.

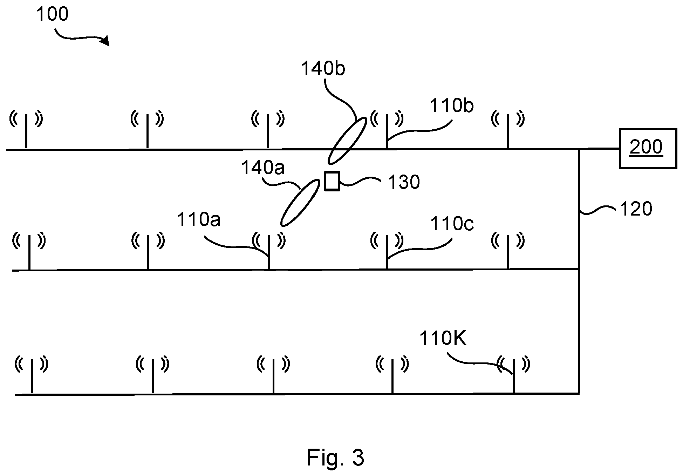

**Fig. 3** is a schematic diagram illustrating a communication network 100 where embodiments presented herein can be applied. In some aspects, the communications network 100 is a D-MIMO network. The communication network 100 comprises APs, four of which are identified at reference numerals 110a, 110b, 110c, 110K. In this respect, the herein disclosed embodiments are not limited to any particular number of APs 110a:110K as long as there are at least two APs 110a:110K. Each AP 110a:110K could be a (radio) access network node, radio base station, base transceiver station, node B (NB), evolved node B (eNB), gNB, integrated access and backhaul (IAB) node, one or more distributed antenna, or the like. The APs 110a:110K operatively connected over interfaces 120 to a centralized node 200, which could represent a core network. The centralized node 200 could be a (radio) base station, or the like. The APs 110a:110K are configured to provide network access to user equipment (UE) 130. Each such UE 130 could be any of a portable wireless device, mobile station, mobile phone, handset, wireless local loop phone, smartphone, laptop computer, tablet computer, wireless modem, wireless sensor device, Internet of Things (IoT) device, network equipped vehicle, or the like. Each UE 130 is configured for wireless communication with the APs 110a:110K. In some examples, the APs 110a:110K use beamforming for this communication, as represented by beams 140a, 140b.

The embodiments disclosed herein relate to techniques for estimating channel drift between a plurality of APs 110a:110K in a D-MIMO network 100. In order to obtain such techniques there is provided a centralized node 200, a method performed by the centralized node 200, a computer program product comprising code, for example in the form of a computer program, that when run on a centralized node 200, causes the centralized node 200 to perform the method.

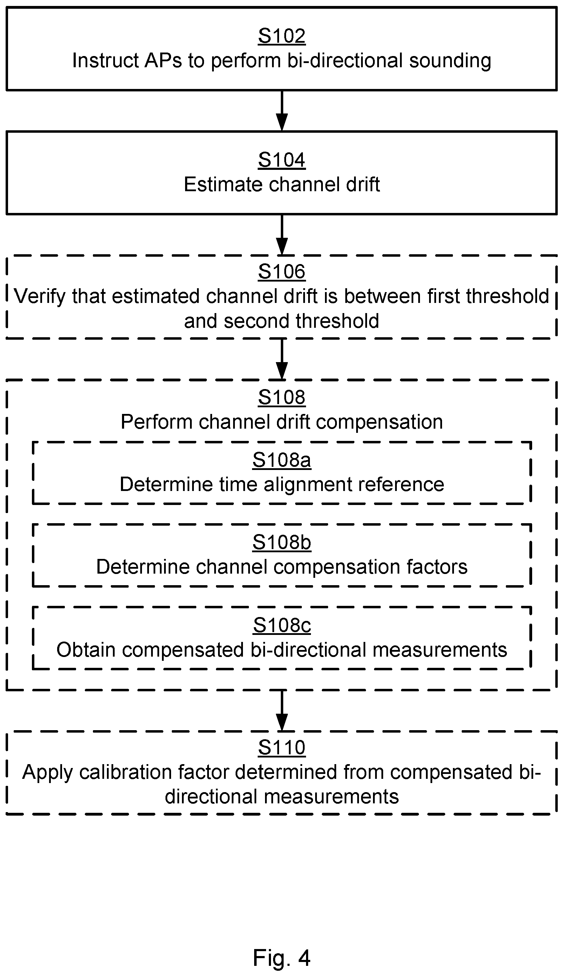

**Fig. 4** is a flowchart illustrating embodiments of methods for estimating channel drift between a plurality of APs 110a:110K in a D-MIMO network 100. The methods are performed by the centralized node 200 in the D-MIMO network 100. The methods are advantageously provided as computer programs 820.

S102: The centralized node 200 instructs the plurality of APs 110a:110K to perform bi-directional sounding for the centralized node 200 to obtain measurements on reference signals for calibration by wirelessly exchanging the reference signals for calibration with each other. Each of the plurality of APs 110a:110K is instructed to wirelessly transmit a first respective reference signal for calibration. At least a first AP 110a of the plurality of APs 110a:110K is instructed to wirelessly transmit a second respective reference signal for calibration.

S104: The centralized node 200 estimates the channel drift from measurements made on the first respective reference signal as transmitted by the first AP 110a and received by a second AP 110b of the plurality APs 110a:110K and on the second respective reference signal as transmitted by the first AP 110a and received by the second AP 110b.

Embodiments relating to further details of estimating channel drift between a plurality of APs 110a:110K in a D-MIMO network 100 as performed by the centralized node 200 will now be disclosed.

In some aspects, the at least two reference signals sent by one and the same AP 110a:110K are time multiplexed (i.e., sent at different points in time). Hence, in some embodiments, the first AP 110a is by the centralized node 200 instructed to time-multiplex transmission of the first reference signal for calibration and transmission of the second reference signal for calibration.

For exemplary purposes, it is in the upcoming exposition assumed that calibration is being performed in a D-MIMO network having exactly 3 APs, denoted AP1, AP2, and AP3. In this respect, AP1 might be equal to the first AP 110a, AP2 might be equal to the second AP 110b, and AP3 might be equal to a third AP 110c.

Aspects of how the plurality of APs 110a:110K might wirelessly exchange the reference signals for calibration with each other will now be disclosed.

As disclosed above, the APs exchange reference signals for calibration with each other. As disclosed above, at least one of the APs transmits at least two reference signals for calibration. This allows for enhanced evaluation of the channel drift, as will now be disclosed in further detail.

For the following exposition, assume that AP1 transmits two reference signals (i.e., the above disclosed first reference signal and second reference signal), that AP2 also transmits two reference signals, and that AP3 transmits only one reference signal (i.e., only the above disclosed first reference signal). A total of five reference signal transmissions are therefore performed.

In some examples, each of the APs receives all reference signals transmitted from the other APs. That is, AP1 receives in total three reference signals for calibration (i.e., two reference signals from AP2 and one reference signal from AP1), AP2 receives in total three reference signals for calibration (i.e., two reference signals from AP1 and one reference signal from AP1), whilst AP3 receives in total four signals for calibration (two references signals from each of AP1 and AP2). The received measurement set obtained from the five reference signal transmissions is thus comprised of 3+3+4=10 measurements. The three reference signals received by AP1, at a particular narrowband channel, e.g., sub-carrier or PRB, are given by: ${y}_{1 , 2} \left(p\right) = {r}_{1} {h}_{1 , 2} \left(p\right) {t}_{2}$ ${y}_{1 , 2} \left(p+δ\right) = {r}_{1} {h}_{1 , 2} \left(p+δ\right) {t}_{2}$ ${y}_{1 , 3} \left(\overline{p}\right) = {r}_{1} {h}_{1 , 3} \left(\overline{p}\right) {t}_{3} .$

Likewise, the three reference signals received by AP2 are given by: ${y}_{2 , 1} \left(k\right) = {r}_{2} {h}_{2 , 1} \left(k\right) {t}_{1}$ ${y}_{2 , 1} \left(k+ϕ\right) = {r}_{2} {h}_{2 , 1} \left(k+ϕ\right) {t}_{1}$ ${y}_{2 , 3} \left(\overline{k}\right) = {r}_{2} {h}_{2 , 3} \left(\overline{k}\right) {t}_{3} .$

Likewise, the four reference signals received by AP3 are given by: ${y}_{3 , 1} \left(l\right) = {r}_{3} {h}_{3 , 1} \left(l\right) {t}_{1}$ ${y}_{3 , 1} \left(l+ϵ\right) = {r}_{3} {h}_{3 , 1} \left(l+ϵ\right) {t}_{1}$ ${y}_{3 , 2} \left(\overline{l}\right) = {r}_{3} {h}_{3 , 2} \left(\overline{l}\right) {t}_{2}$ ${y}_{3 , 2} \left(\overline{l}+\overline{ϵ}\right) = {r}_{3} {h}_{3 , 2} \left(\overline{l}+\overline{ϵ}\right) {t}_{2} .$

The notation used follows the same convention as above, with the introduction of a discrete time index characterizing the measurements instance. For example, *y*_{1,2}(*x*) = *r*₁*h*_{1,2}(*x*)*t*₂ represents the measurement performed at AP1 when AP2 transmits at the discrete time instance *t* = *x.* Here, *r*₁ is the gain of the receiver chain at AP1, *t*₂ is the gain of the transmitter chain at AP2, and *h*_{1,2}(*x*) is the narrowband propagation channel response at time instance x. Hence, the time index symbols *p, δ, p̅, k, ϕ, k, l, ε, l̅,* and *ε̅* in Equations (7)-(16) are used to refer to respective discrete time instances. A discrete time instance may be, e.g., the time instance referring to one OFDM symbol in an NR slot or frame.

The multiple transmission instances (i.e., the instance when the first reference signal is transmitted and the instance when the second reference signal is transmitted) from a single AP are time-multiplexed (i.e., separated in time), to allow channel interpolation and/or extrapolation across time. This implies that none of the time indexes associated with the measurements from a single AP are equal. E.g., *p* ≠ *p* + *δ*, or *p* ≠ *p̅* or *p* ≠ *k*. Also, for simplicity, but without loss of generalization, it can be assumed that all time indexes above are positive.

As already noted, the propagation channel can vary, or drift, significantly within a bi-directional measurement. As an illustrative example, consider the set of bi-directional measurements between AP2 and AP3, namely {*y*_{2,3}(*k̅*), *y*_{3,2}(*l̅*), *y*_{3,2}(*l̅* + *ε̅*)}, channel drift may occur if the coherence time of the channel is smaller than |*k̅* - *l̅*|.

In some examples, the multiple transmission instances from a single AP are contiguous in time (e.g., *ε̅* ∈ {±1}). For example, the first reference signal and the second reference signal might be two consecutive CSI RSs in NR. In other examples, the multiple transmissions instances from a single AP are dis-contiguous, or non- neighboring, in time. In such examples, it is possible to introduce time interlacing between adjacent transmissions instances between the APs. As a non-limiting example, let *l̅* = 1, *k̅* = 2 and *l̅* + *ε* = 3.

Once the measurement round is concluded, and measurements for Equations (7)-(16) are made available at the centralized unit, the centralized unit proceeds by evaluating if the measurements reveal that significant channel drifts existed during the exchange of the reference signals.

Aspects of how the centralized node 200 might decide whether significant channel drifts occurred during the exchange of reference signals will be disclosed next.

In some embodiments, the channel drift is defined by any, or any combination, of the phase drift between the first reference signal as received by the second AP 110b and the second reference signal as received by the second AP 110b, and/or the amplitude drift between the first reference signal as received by the second AP 110b and the second reference signal as received by the second AP 110b.

In one example, the phase drift associated with two (or more) reference signal transmissions from one AP to another AP is evaluated and compared against a pre-defined performance threshold. For example, in the case of the measurements described by Equations (7)-(16), the phase drift *β*_{1,2} associated with the transmissions from AP2 to AP1 can be evaluated. The phase drift *β*_{1,2} can be evaluated as: ${β}_{1 , 2} = ∠ \left({y}_{1 , 2}\left(p+δ\right)/{y}_{1 , 2}\left(p\right)\right)$ where *∠* denotes the angle operator. The phase drift may also be evaluated for other inter-AP links, e.g., the phase drift *β*_{3,1} for the link between AP1 and AP3 can be evaluated in the same way as in Equation (17) but involving instead AP1 and AP3, etc.

Finally, the evaluated phase drifts {*β*_{1,2}, *β*_{3,1}, ... }, or a function of those, may be compared against a performance threshold in order to determine whether channel drift compensation should be performed or not. In one example, the magnitude of the largest computed phase drift, here denoted by ${β}_{MAX} = max \left\{\left|{β}_{1 , 2}\right|,\left|{β}_{3 , 1}\right|,…\right\}$ is compared against a pre-defined performance threshold *γₚ.* Then, it can be evaluated whether the inequality expressed as ${β}_{MAX} > {γ}_{p}$ holds or not. If the inequality in Equation (18) holds, then there is at least one significant channel drift during the calibration measurements and compensation may be performed.

The pre-defined performance threshold *γₚ* may be set according to requirements for calibration. For example, in interference suppression schemes in multi-user MIMO (e.g., as in zero-forcing interference suppression schemes), the calibration error is required to be below a few degrees. Thus, an example value for the phase drift threshold may be *γₚ* = 10° or *γₚ* = 5°, depending on network performance requirements.

Also other metrics, other than channel phase drift, can likewise be evaluated. For example, the following metric ${β}_{1 , 2}^{′} = \frac{{\left|{y}_{1 , 2}\left(p+δ\right)-{y}_{1 , 2}\left(p\right)\right|}^{2}}{{\left|{y}_{1 , 2}\left(p+δ\right)\right|}^{2} + {\left|{y}_{1 , 2}\left(p\right)\right|}^{2}}$ can be evaluated. Then, in the same way as above, the magnitude of such largest computed drift can be compared against a corresponding pre-defined performance threshold to determine if there is at least one significant channel drift.

Still further, in addition to the performance threshold, also further thresholds may be defined, such as a second threshold representing a discard threshold *γ_{d}.* Such a discard threshold *γ_{d}* could provide a reference value to indicate whether the inter-AP channel drift variations during the measurements were too severe to allow for any effective compensation and therefore that the measurements can be discarded. For example, if the phase drift between the two AP2 transmissions in Equation (17) is close to 180°, it may be safer to discard such measurements rather than trying to compensate them. With that in mind, it follows that *γ_{d} > γₚ* and an exemplary value could be *γ_{d}* = 60°. Considering the phase drift as an example metric, the current example can thus be summarized as follows: ${β}_{MAX} \left\{\begin{matrix}< {γ}_{p} , & Small channel drift , \\ \geq {γ}_{p} and < {γ}_{d} & Moderate channel drift , \\ \geq {γ}_{d} , & Discard measurements .\end{matrix}\right.$

Hence, in some aspects channel drift compensation is only performed if a moderate channel drift is detected. Therefore, in some embodiments, the centralized node 200 is configured to perform (optional) action S106:
S106: The centralized node 200 verifies that the estimated channel drift is above a first threshold value but below a second threshold value before performing any channel drift compensation. The first threshold is above denoted performance threshold *γₚ* and the second threshold is above denoted discard threshold *γ_{d}.*

Aspects of performing the channel drift compensation will now be disclosed.

In some embodiments, the centralized node 200 is configured to perform (optional) action S108.

S108: The centralized node 200 performs channel drift compensation to calibrate the APs 110a:110K based on bi-directional measurements made during the bi-directional sounding on the exchanged reference signals and on the estimated channel drift.

Time alignment references might be determined if a moderate channel drift was estimated in action S104 (as verified in (optional) action S106).

In some embodiments, each of the reference signals for calibration is transmitted at a respective transmission time instance, and performing the channel drift compensation in action S108 comprises (optional) action S108a.

S108a: The centralized node 200 determines at least one time alignment reference based on the transmission time instances of the reference signals for calibration.

Time alignment references might be determined for the measurements resulting in the estimated channel drift being above the performance threshold or for all calibration measurements (e.g., the ten measurements of Equation (7)-(16)). Without loss of generality, it will hereinafter be assumed that the time alignment references are determined whilst taking into account all calibration measurements.

It is here noted that the measurement set described by Equation (7)-(16) is composed of measurements associated with three bi-directional soundings. The measurement associated with the first bi-directional sounding session, e.g., between AP1 and AP2, consists of {*y*_{1,2}(*p*),*y*_{1,2}(*p* + *δ*), *y*_{2,1}(*k*), *y*_{2,1}(*k + ϕ*)}. The measurement associated with the second bi-directional sounding session, e.g., between AP1 and AP3, consists of *y*_{1,3}(*p̅*), *y*_{3,1}(*l*), *y*_{3,1}(*l* + *∈*). The measurement associated with the third bi-directional sounding session, e.g., between AP2 and AP3, consists of *y*_{2,3}(*k̅*), *y*_{3,2}(*l̅*)*, y*_{3,2}(*l̅ + ε̅*)*.*

In some aspects, the requirement for calibration is that the measurements in each bi-directional sounding session need to be time-aligned to a common time instance.

In one example (below referred to as Example E1), the time alignment reference at which the measurements that comprise a bi-directional sounding session is distinct for each pair of APs. In such examples, the time alignment reference might be defined by the average of all measurement indexes associated with a particular bi-directional measurement session. For example, the time alignment reference for the third bi-directional sounding session (between AP2 and AP3) might be defined by the average of all instances associated with its measurements, i.e., ${\hat{t}}_{3 , 2} = {\hat{t}}_{2 , 3} = \frac{1}{3} \left(\overline{k}+\overline{l}+\overline{l}+\overline{ϵ}\right)$. This ensures that the time alignment reference is the closest in time it can be towards all involved measurements. Hence, in some embodiments, the at least one time alignment reference is determined as an average of the transmission time instances of the reference signals for calibration.

In another example (denoted Example E2), there is one global time alignment reference for the entire measurement round, i.e., for all measurements in Equations (7)-(16). In such examples, the time alignment reference might be defined by the average time index of all calibration measurements. For example, the global time alignment reference, denoted *t̂_{CLOBAL},* might be calculated as ${\hat{t}}_{GLOBAL} = \frac{1}{10} \left(p+p+δ+\overline{p}+k+k+ϕ+\overline{k}+l+l+ϵ+\overline{l}+\overline{l}+\hat{ϵ}\right)$ .

The centralized node coordinates the measurement session between the APs, and thus knows all measurement time instances. In one example, the time alignment reference (e.g., *t̂_{GLOBAL}*) might be calculated by the centralized node beforehand, or after obtaining the calibration measurements from the APs.

Aspects of performing channel drift compensation will be disclosed next.

In general terms, channel drift compensation can be performed to virtually align the amplitude and phase of the bi-directional measurement at both ends of the wireless link to the same point in time. In order to achieve that, it is noted from Equations (7)-(16) that any variability present in two or more measurements performed in the same direction of a wireless link is solely due to propagation channel effects (i.e., the response of transceiver chains stays (practically) invariant across time during the measurement round). For example, from Equations (7)-(16) follow that $\frac{{\partial }^{q} {y}_{n , m} \left(t\right)}{\partial {t}^{q}} = \frac{{\partial }^{q} {h}_{n , m} \left(t\right)}{\partial {t}^{q}} ,$ where 1 ≤ *q* ≤ ∞. Thus, channel drift effects present in the received signals have a direct relation (i.e., a one-to-one mapping) to the channel drift of the propagation channel, and thus can be used to construct an artificial measurement set for calibration where inter-AP channel drifts during calibration measurements are compensated for.

In some embodiments, performing the channel drift compensation in action S108 comprises (optional) actions S108b and S108c.

S108b: The centralized node 200 determines channel drift compensation factors based on the at least one time alignment reference.

S108c: The centralized node 200 obtains compensated bi-directional measurements by applying the channel drift compensation factors to at least some of the bi-directional measurements.

In some examples, the compensated bi-directional measurements are obtained only for the measurements which were responsible for channel drift detection. In some embodiments, the compensated bi-directional measurements are, by the channel drift compensation factors, time-aligned with respect to a common time reference. In some embodiments, the channel drift compensation factors are determined based on the bi-directional measurements.

In one example, channel drift compensation is performed per bi-directional sounding session. For illustration purposes, assume that its associated time alignment reference determination was performed according to aforementioned Example E1, and that AP2 is to be calibrated with respect to AP3. In this case, and according to the example in Equations (7)-(16), AP2 transmitted two reference signals for calibration whereas AP3 transmitted only one reference signal for calibration, and thus phase drift compensation is performed using the two received signals *y*_{3,2}(*l*) and *y*_{3,2}(*l + **ε***).

In one example, compensation of the phase drift between measurements is performed via linear regression. Hence, in some embodiments, the channel drift compensation factors are determined via linear regression of the bi-directional measurements. That is, a rate of change may be estimated as ${\hat{Δ}}_{3 , 2} = \frac{{y}_{3 , 2} \left(\overline{l}+\hat{ϵ}\right) - {y}_{3 , 2} \left(\overline{l}\right)}{\hat{ϵ}} .$

Channel drift compensation might then be performed as ${\hat{y}}_{3 , 2} \left({\hat{t}}_{3 , 2}\right) = {y}_{3 , 2} \left(\overline{l}+\hat{ϵ}\right) {f}_{3 , 2} ,$ ${\hat{y}}_{2 , 3} \left({\hat{t}}_{3 , 2}\right) = {y}_{2 , 3} \left(\overline{k}\right) {f}_{2 , 3} ,$ where ${f}_{3 , 2} = {\hat{Δ}}_{3 , 2}^{- 1} {\left(\overline{l}+\overline{ϵ}-{\hat{t}}_{3 , 2}\right)}^{- 1}$ and ${f}_{2 , 3} = {\hat{Δ}}_{3 , 2}^{- 1} {\left(\overline{k}-{\hat{t}}_{3 , 2}\right)}^{- 1}$ are channel drift compensation factors. It is noted that the rate of change of the propagation channel Δ̂_{3,2} is expected to be reciprocal Δ̂_{3,2} = Δ̂_{2,3}, and thus it can be used in the compensation of both bi-directional measurements.

The centralized node can then use the time aligned bi-directional measurements, *ŷ*_{3,2}(*t̂*_{3,2}) and *ŷ*_{2,3}(*t̂*_{3,2}), for reciprocity calibration.

In another example, channel drift compensation is performed per bi-directional sounding session but between two APs that each has transmitted more than one reference signal for calibration. This is the case for AP1 and AP2 according to the example in Equations (7)-(16). Since each AP then receives two reference signals for calibration, two rates of change coefficients can be estimated. Namely: ${\hat{Δ}}_{2 , 1} = \frac{{y}_{2 , 1} \left(k+ϕ\right) - {y}_{2 , 1} \left(k\right)}{ϕ}$ ${\hat{Δ}}_{1 , 2} = \frac{{y}_{1 , 2} \left(p+δ\right) - {y}_{1 , 2} \left(p\right)}{δ} .$

Although such two rates of change computed should in principle be identical due to reciprocity of the propagation channel, averaging the two above quantifies may be beneficial in the case of (independent) additive noise contributions during the bi-directional measurements. Therefore, an average rate of change may be computed as ${\hat{\overline{Δ}}}_{1 , 2} = \frac{\left({\hat{Δ}}_{2 , 1}+{\hat{Δ}}_{1 , 2}\right)}{2} .$

Channel drift compensation can then be performed in a similar fashion as in Equations (19) and (20).

Yet another example addresses cases where more than two reference signals are sent in one direction of the wireless link. In such cases, higher order regression approaches can be used. Hence, in some embodiments, the channel drift compensation factors are determined via an n:th regression fit of the bi-directional measurements. For example, assume that AP1 transmitted yet another additional reference signal for calibration, namely ${y}_{3 , 1} \left(l+α\right) = {r}_{3} {h}_{3 , 1} \left(l+α\right) {t}_{1} ,$ in addition to what is stated in Equations (13) and (14). Then, in the case of calibrating of AP1 with respect to AP3, AP3 has now received reference signals for calibration from AP1 at three distinct time instances, namely *y*_{3,1}(*l*), *y*_{3,1}(*l* + *ε*) and *y*_{3,1}(*l + α*)*.* With those received reference signals, an estimate of the rate of change, e.g., ${y}_{3 , 1}^{′} \left(l\right)$, and an estimate of the rate of change of the rate of change, e.g., ${y}_{3 , 1}^{"} \left(l\right)$, can be estimated. With those estimates, channel drift alignment can be performed where an estimate is obtained according to the first terms of a Taylor series expansion, such as ${\hat{y}}_{3 , 1} \left({\hat{t}}_{3 , 1}\right) = {y}_{3 , 1} \left(l\right) + {y}_{3 , 1}^{′} \left(l\right) \left({\hat{t}}_{3 , 1}-l\right) + {y}_{3 , 1}^{"} \left(l\right) \frac{{\left({\hat{t}}_{3 , 1}-l\right)}^{2}}{2} .$

Since the rate of change and curvature of the channel are reciprocal, a similar computation as in Equation (22) can be used for channel drift compensation of the measurement *y*_{1,3}(*p̅*) in order to obtain *ŷ*_{1,3}(*t̂*_{3,1}).

The aligned measurements {*ŷ*_{3,1}(*t̂*_{3,1}), *ŷ*_{1,3}(*t̂*_{3,1})} can then be used by the centralized node for reciprocity calibration.

As an alternative to use a Taylor series, a spline may be fit to the measurements *y*_{3,1}(*l*)*, y*_{3,1}(*l* + *ε*) and *y*_{3,1}(*l + α*) (taken at time instances *l, l* + ε and *l* + α). For example, starting with a set of predetermined basis functions, the measurements can be expressed as linear combinations of these basis functions using a set of coefficients. These coefficients in turn may be obtained by a least-squares or similar fit.

Aspects of reciprocity calibration will be disclosed next.

In some embodiments, the centralized node 200 is configured to perform (optional) action S110.

S110: The centralized node 200 applies calibration coefficients determined from the compensated bi-directional measurements.

The centralized node may utilize a non-compensated (i.e., original) measurement set or the compensated measurement set $\left\{{\hat{y}}_{2 , 1}\left({\hat{t}}_{2 , 1}\right),{\hat{y}}_{1 , 2}\left({\hat{t}}_{2 , 1}\right),{\hat{y}}_{3 , 1}\left({\hat{t}}_{3 , 1}\right),{\hat{y}}_{1 , 3}\left({\hat{t}}_{3 , 1}\right),{\hat{y}}_{2 , 3}\left({\hat{t}}_{3 , 2}\right),{\hat{y}}_{3 , 2}\left({\hat{t}}_{3 , 2}\right)\right\}$ to estimate reciprocity calibration coefficients according to any existing techniques, such as the method described in the above referenced paper entitled "Scalable Synchronization and Reciprocity Calibration for Distributed Multiuser MIMO".

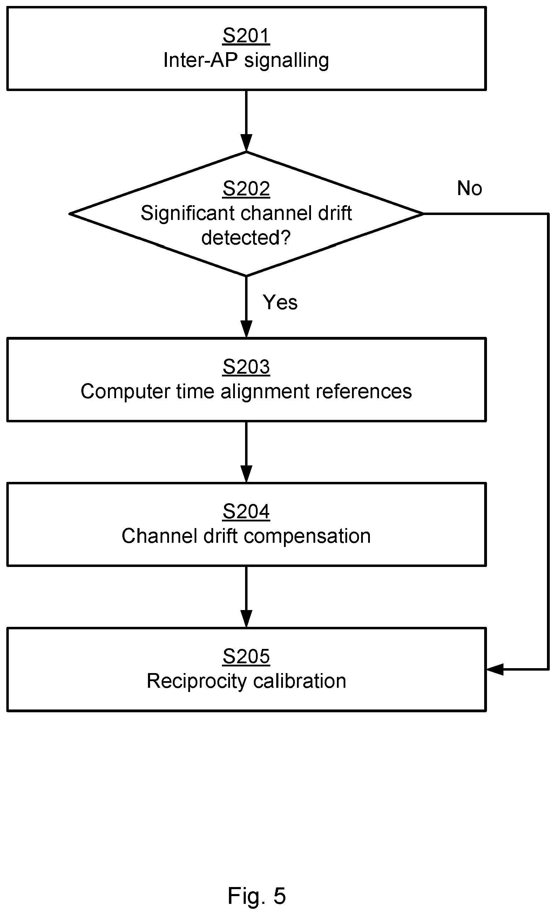

Reference is next made to the flowchart of Fig. 5 Illustrating a method for estimating channel drift between a plurality of APs 110a:110K in a D-MIMO network 100 based on at least some of the above disclosed embodiments.

In action S201, reference signals for calibration are exchanged between APs. It is necessary that at least one AP transmits at least two reference signals, and that these reference signals are time multiplexed.

In action S202, it is detected whether channel drift occurred during the calibration measurements or not.

If significant channel drifts were detected, actions S203 and S204 are triggered. Else, it is assumed that the inter-AP channels are static and action S205 can be entered.

In action S203, one or more time alignment references are computed based on the time instances at which the reference signals were transmitted. These time alignment references consist of points in time to time align the signals through channel drift compensation (as in action S204).

In action S204, channel drift compensation is performed. This comprises 1) computing channel drift compensation factors based on i) the measured signals, ii) their transmission time instances and iii) the computed time alignment references, and 2) applying the compensation factors to the measured signals.

In action S205, reciprocity calibration is performed based on the time aligned measured signals. Conventional calibration can be used to process the compensated measurements.

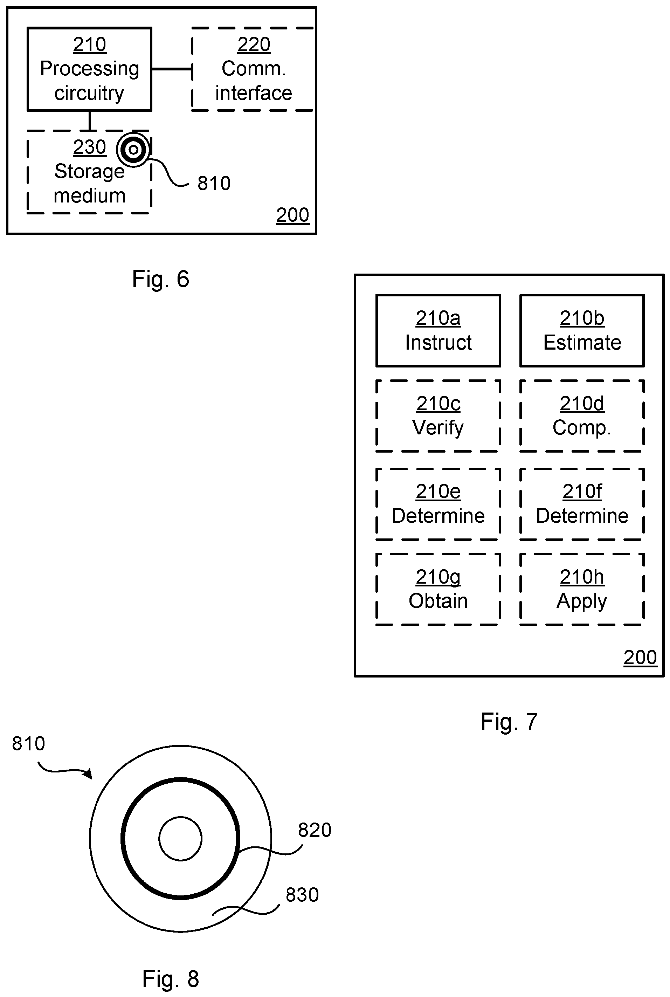

Fig. 6 schematically illustrates, in terms of a number of functional units, the components of a centralized node 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 810 (as in Fig. 8), e.g., in the form of a storage medium 230. The processing circuitry 210 may further be provided as at least one application specific integrated circuit (ASIC), or field programmable gate array (FPGA).

Particularly, the processing circuitry 210 is configured to cause the centralized node 200 to perform a set of operations, or actions, as disclosed above. For example, the storage medium 230 may store the set of operations, and the processing circuitry 210 may be configured to retrieve the set of operations from the storage medium 230 to cause the centralized node 200 to perform the set of operations. The set of operations may be provided as a set of executable instructions.

Thus, the processing circuitry 210 is thereby arranged to execute methods as herein disclosed. The storage medium 230 may also comprise persistent storage, which, for example, can be any single one or combination of magnetic memory, optical memory, solid state memory or even remotely mounted memory. The centralized node 200 may further comprise a communications interface 220 at least configured for communications with the APs 110a:110K and the user equipment 130. As such the communications interface 220 may comprise one or more transmitters and receivers, comprising analogue and digital components. The processing circuitry 210 controls the general operation of the centralized node 200 e.g., by sending data and control signals to the communications interface 220 and the storage medium 230, by receiving data and reports from the communications interface 220, and by retrieving data and instructions from the storage medium 230. Other components, as well as the related functionality, of the centralized node 200 are omitted in order not to obscure the concepts presented herein.

**Fig. 7** schematically illustrates, in terms of a number of functional modules, the components of a centralized node 200 according to an embodiment. The centralized node 200 of Fig. 7 comprises a number of functional modules; an instruct module 210a configured to perform action S102, and an estimate module 210b configured to perform action S104. The centralized node 200 of Fig. 7 may further comprise a number of optional functional modules, such as any of a verify module 210c configured to perform action S106, a compensate module 210d configured to perform action S108, a determine module 210e configured to perform action S108a, a determine module 210f configured to perform action S108b, an obtain module 210g configured to perform action S108c, and an apply module 210h configured to perform action S110.

In general terms, each functional module 210a:210h may in one embodiment be implemented only in hardware and in another embodiment with the help of software, i.e., the latter embodiment having computer program instructions stored on the storage medium 230 which when run on the processing circuitry makes the centralized node 200 perform the corresponding actions mentioned above in conjunction with Fig 7. It should also be mentioned that even though the modules correspond to parts of a computer program, they do not need to be separate modules therein, but the way in which they are implemented in software is dependent on the programming language used. Preferably, one or more or all functional modules 210a:210h may be implemented by the processing circuitry 210, possibly in cooperation with the communications interface 220 and/or the storage medium 230. The processing circuitry 210 may thus be configured to from the storage medium 230 fetch instructions as provided by a functional module 210a:210h and to execute these instructions, thereby performing any actions as disclosed herein.

The centralized node 200 may be provided as a standalone device or as a part of at least one further device. For example, the centralized node 200 may be provided in a node of an access network (such as in one or more of the APs 110a:110K) or in a node of the core network. Alternatively, functionality of the centralized node 200 may be distributed between at least two devices, or nodes. These at least two nodes, or devices, may either be part of the same network part (such as the access network or the core network) or may be spread between at least two such network parts. In general terms, instructions that are required to be performed in real time may be performed in a device, or node, operatively closer to the cell than instructions that are not required to be performed in real time. Thus, a first portion of the instructions performed by the centralized node 200 may be executed in a first device, and a second portion of the of the instructions performed by the centralized node 200 may be executed in a second device (such as distributed between two or more of the APs 110a:110K); the herein disclosed embodiments are not limited to any particular number of devices on which the instructions performed by the centralized node 200 may be executed. Hence, the methods according to the herein disclosed embodiments are suitable to be performed by a centralized node 200 residing in a cloud computational environment. Therefore, although a single processing circuitry 210 is illustrated in Fig. 6 the processing circuitry 210 may be distributed among a plurality of devices, or nodes. The same applies to the functional modules 210a:210h of Fig. 7 and the computer program 820 of Fig. 8.

**Fig. 8** shows one example of a computer program product 810 comprising computer readable storage medium 830. On this computer readable storage medium 830, a computer program 820 can be stored, which computer program 820 can cause the processing circuitry 210 and thereto operatively coupled entities and devices, such as the communications interface 220 and the storage medium 230, to execute methods according to embodiments described herein. The computer program 820 and/or computer program product 810 may thus provide means for performing any actions as herein disclosed.

In the example of Fig. 8, the computer program product 810 is illustrated as an optical disc, such as a CD (compact disc) or a DVD (digital versatile disc) or a Blu-Ray disc. The computer program product 810 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 820 is here schematically shown as a track on the depicted optical disk, the computer program 820 can be stored in any way which is suitable for the computer program product 810.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for estimating channel drift between a plurality of access points, APs (110a:110K), in a distributed multiple input multiple output, D-MIMO, network (100), the method being performed by a centralized node (200) in the D-MIMO network (100), the method comprising:
instructing (S102) the plurality of APs (110a:110K) to perform bi-directional sounding for the centralized node (200) to obtain measurements on reference signals for calibration by wirelessly exchanging the reference signals for calibration with each other, wherein each of the plurality of APs (110a:110K) is instructed to wirelessly transmit a first respective reference signal for calibration, wherein at least a first AP (110a) of the plurality of APs (110a:110K) is instructed to wirelessly transmit a second respective reference signal for calibration;
estimating (S104) the channel drift from measurements made on the first respective reference signal as transmitted by the first AP (110a) and received by a second AP (110b) of the plurality APs (110a:110K) and on the second respective reference signal as transmitted by the first AP (110a) and received by the second AP (110b); and
performing (S108) channel drift compensation to calibrate the APs (110a:110K) based on bi-directional measurements made during the bi-directional sounding on the exchanged reference signals and on the estimated channel drift.

2. The method according to claim 1, wherein the channel drift is defined by any, or any combination, of:
phase drift between the first reference signal as received by the second AP (110b) and the second reference signal as received by the second AP (110b), and/or
amplitude drift between the first reference signal as received by the second AP (110b) and the second reference signal as received by the second AP (110b).

3. The method according to any of the preceding claims, wherein the method further comprises:
verifying (S106) that the estimated channel drift is above a first threshold value but below a second threshold value before performing the channel drift compensation.

4. The method according to any of the preceding claims, wherein each of the reference signals for calibration is transmitted at a respective transmission time instance, and wherein performing the channel drift compensation comprises:
determining (S 108a) at least one time alignment reference based on the transmission time instances of the reference signals for calibration.

5. The method according to claim 4, wherein the at least one time alignment reference is determined as an average of the transmission time instances of the reference signals for calibration.

6. The method according to claim 4 or 5, wherein performing the channel drift compensation comprises:
determining (S108b) channel drift compensation factors based on the at least one time alignment reference; and
obtaining (S108c) compensated bi-directional measurements by applying the channel drift compensation factors to at least some of the bi-directional measurements.

7. The method according to claim 6, wherein the channel drift compensation factors are determined based on the bi-directional measurements.

8. The method according to any of claims 6 to 7, wherein the channel drift compensation factors are determined via an n:th regression fit of the bi-directional measurements.

9. The method according to any of claims 6 to 7, wherein the channel drift compensation factors are determined via linear regression of the bi-directional measurements.

10. The method according to any of claims 6 to 9, wherein the method further comprises:
applying (S110) calibration coefficients determined from the compensated bi-directional measurements.

11. The method according to any preceding claim, wherein the first AP (110a) is by the centralized node (200) instructed to time-multiplex transmission of the first reference signal for calibration and transmission of the second reference signal for calibration.

12. A centralized node (200) for estimating channel drift between a plurality of access points, APs (110a:110K), in a distributed multiple input multiple output, D-MIMO, network (100), the centralized node (200) comprising processing circuitry (210), the processing circuitry being configured to cause the centralized node (200) to:
instruct the plurality of APs (110a:110K) to perform bi-directional sounding for the centralized node (200) to obtain measurements on reference signals for calibration by wirelessly exchanging the reference signals for calibration with each other, wherein each of the plurality of APs (110a:110K) is instructed to wirelessly transmit a first respective reference signal for calibration, wherein at least a first AP (110a) of the plurality of APs (110a:110K) is instructed to wirelessly transmit a second respective reference signal for calibration;
estimate the channel drift from measurements made on the first respective reference signal as transmitted by the first AP (110a) and received by a second AP (110b) of the plurality APs (110a:110K) and on the second respective reference signal as transmitted by the first AP (110a) and received by the second AP (110b); and
perform channel drift compensation to calibrate the APs (110a:110K) based on bi-directional measurements made during the bi-directional sounding on the exchanged reference signals and on the estimated channel drift.

13. The centralized node (200) according to claim 12, further being configured to perform the method according to any of claims 2 to 11.

14. A computer program (820) for estimating channel drift between a plurality of access points, APs (110a:110K), in a distributed multiple input multiple output, D-MIMO, network (100), the computer program comprising computer code which, when run on processing circuitry (210) of a centralized node (200), causes the centralized node (200) to:
instruct (S102) the plurality of APs (110a:110K) to perform bi-directional sounding for the centralized node (200) to obtain measurements on reference signals for calibration by wirelessly exchanging the reference signals for calibration with each other, wherein each of the plurality of APs (110a:110K) is instructed to wirelessly transmit a first respective reference signal for calibration, wherein at least a first AP (110a) of the plurality of APs (110a:110K) is instructed to wirelessly transmit a second respective reference signal for calibration;
estimate (S104) the channel drift from measurements made on the first respective reference signal as transmitted by the first AP (110a) and received by a second AP (110b) of the plurality APs (110a:110K) and on the second respective reference signal as transmitted by the first AP (110a) and received by the second AP (110b); and
performing (S108) channel drift compensation to calibrate the APs (110a:110K) based on bi-directional measurements made during the bi-directional sounding on the exchanged reference signals and on the estimated channel drift.

15. A computer program product (810) comprising a computer program (820) according to claim 14, and a computer readable storage medium (830) on which the computer program is stored.

## Patentansprüche

1. Verfahren zum Schätzen der Kanaldrift zwischen einer Vielzahl von Zugangspunkten, APs (110a: 110K), in einem verteilten Multiple-Input-Multiple-Output-, D-MIMO, Netzwerk (100), wobei das Verfahren von einem zentralen Knoten (200) in dem D-MIMO-Netzwerk (100) durchgeführt wird und Folgendes umfasst:
Anweisen (S102) der Vielzahl von APs (110a: 110K), eine bidirektionale Sondierung für den zentralen Knoten (200) durchzuführen, um Messungen an Referenzsignalen zur Kalibrierung zu erhalten, indem die Referenzsignale zur Kalibrierung drahtlos untereinander ausgetauscht werden, wobei jeder der Vielzahl von APs (110a: 110K) angewiesen wird, ein erstes jeweiliges Referenzsignal zur Kalibrierung drahtlos zu übertragen, wobei mindestens ein erster AP (110a) aus der Vielzahl von APs (110a: 110K) angewiesen wird, ein zweites jeweiliges Referenzsignal zur Kalibrierung drahtlos zu übertragen;
Schätzen (S104) der Kanaldrift anhand von Messungen, die an dem ersten jeweiligen Referenzsignal, wie es von dem ersten AP (110a) übertragen und von einem zweiten AP (110b) aus der Vielzahl von APs (110a: 110K) empfangen wird, und an dem zweiten jeweiligen Referenzsignal, wie es von dem ersten AP (110a) übertragen und von dem zweiten AP (110b) empfangen wird, vorgenommen wurden; und
Durchführen (S108) einer Kanaldriftkompensation zur Kalibrierung der APs (110a: 110K) basierend auf bidirektionalen Messungen, die während der bidirektionalen Sondierung an den ausgetauschten Referenzsignalen vorgenommen wurden, sowie auf der geschätzten Kanaldrift.

2. Verfahren nach Anspruch 1, wobei die Kanaldrift durch eines oder eine beliebige Kombination von Folgendem definiert ist:
Phasendrift zwischen dem ersten Referenzsignal, wie es von dem zweiten AP (110b) empfangen wird, und dem zweiten Referenzsignal, wie es von dem zweiten AP (110b) empfangen wird, und/oder
Amplitudendrift zwischen dem ersten Referenzsignal, wie es von dem zweiten AP (110b) empfangen wird, und dem zweiten Referenzsignal, wie es von dem zweiten AP (110b) empfangen wird.

3. Verfahren nach einem der vorstehenden Ansprüche, wobei das Verfahren weiter Folgendes umfasst:
Überprüfen (S106), dass die geschätzte Kanaldrift über einem ersten Schwellenwert, aber unter einem zweiten Schwellenwert liegt, bevor die Kanaldriftkompensation durchgeführt wird.

4. Verfahren nach einem der vorstehenden Ansprüche, wobei jedes der Referenzsignale zur Kalibrierung zu einem jeweiligen Übertragungszeitpunkt übertragen wird und wobei Durchführen der Kanaldriftkompensation Folgendes umfasst:
Bestimmen (S108a) mindestens einer Zeitausrichtungsreferenz basierend auf den Übertragungszeitpunkten der Referenzsignale zur Kalibrierung.

5. Verfahren nach Anspruch 4, wobei die mindestens eine Zeitausrichtungsreferenz als Mittelwert der Übertragungszeitpunkte der Referenzsignale zur Kalibrierung bestimmt wird.

6. Verfahren nach Anspruch 4 oder 5, wobei Durchführen der Kanaldriftkompensation Folgendes umfasst:
Bestimmen (S108b) der Kanaldriftkompensationsfaktoren basierend auf der mindestens einen Zeitausrichtungsreferenz; und
Erhalten (S108c) kompensierter bidirektionaler Messungen durch Anwenden der Kanaldriftkompensationsfaktoren auf mindestens einige der bidirektionalen Messungen.

7. Verfahren nach Anspruch 6, wobei die Kanaldriftkompensationsfaktoren basierend auf den bidirektionalen Messungen bestimmt werden.

8. Verfahren nach einem der Ansprüche 6 oder 7, wobei die Kanaldriftkompensationsfaktoren mittels einer n-ten Regressionsanpassung der bidirektionalen Messungen bestimmt werden.

9. Verfahren nach einem der Ansprüche 6 oder 7, wobei die Kanaldriftkompensationsfaktoren mittels linearer Regression der bidirektionalen Messungen bestimmt werden.

10. Verfahren nach einem der Ansprüche 6 bis 9, wobei das Verfahren weiter Folgendes umfasst:
Anwenden (S110) von Kalibrierkoeffizienten, die aus den kompensierten bidirektionalen Messungen bestimmt wurden.

11. Verfahren nach einem vorstehenden Anspruch, wobei der erste AP (110a) von dem zentralen Knoten (200) angewiesen wird, die Übertragung des ersten Referenzsignals zur Kalibrierung und die Übertragung des zweiten Referenzsignals zur Kalibrierung zeitlich zu multiplexen.

12. Zentraler Knoten (200) zur Schätzung der Kanaldrift zwischen einer Vielzahl von Zugangspunkten, APs (110a: 110K), in einem verteilten Multiple-Input-Multiple-Output-, D-MIMO, Netzwerk (100), wobei der zentrale Knoten (200) eine Verarbeitungsschaltung (210) umfasst, die so konfiguriert ist, dass sie den zentralen Knoten (200) veranlasst zum:
Anweisen der Vielzahl von APs (110a: 110K), eine bidirektionale Sondierung für den zentralen Knoten (200) durchzuführen, um Messungen an Referenzsignalen zur Kalibrierung zu erhalten, indem die Referenzsignale zur Kalibrierung drahtlos untereinander ausgetauscht werden, wobei jeder der Vielzahl von APs (110a: 110K) angewiesen wird, ein erstes jeweiliges Referenzsignal zur Kalibrierung drahtlos zu übertragen, wobei mindestens ein erster AP (110a) aus der Vielzahl von APs (110a: 110K) angewiesen wird, ein zweites jeweiliges Referenzsignal zur Kalibrierung drahtlos zu übertragen;
Schätzen der Kanaldrift anhand von Messungen, die an dem ersten jeweiligen Referenzsignal, wie es von dem ersten AP (110a) übertragen und von einem zweiten AP (110b) aus der Vielzahl von APs (110a: 110K) empfangen wird, und an dem zweiten jeweiligen Referenzsignal, wie es von dem ersten AP (110a) übertragen und von dem zweiten AP (110b) empfangen wird, vorgenommen wurden; und
Durchführen einer Kanaldriftkompensation zur Kalibrierung der APs (110a: 110K) basierend auf bidirektionalen Messungen, die während der bidirektionalen Sondierung an den ausgetauschten Referenzsignalen vorgenommen wurden, sowie auf der geschätzten Kanaldrift.

13. Zentraler Knoten (200) nach Anspruch 12, der weiter konfiguriert ist, um das Verfahren nach einem der Ansprüche 2 bis 11 durchzuführen.

14. Computerprogramm (820) zum Schätzen der Kanaldrift zwischen einer Vielzahl von Zugangspunkten, APs (110a: 110K), in einem verteilten Multiple-Input-Multiple-Output-, D-MIMO, Netzwerk (100), wobei das Computerprogramm Computercode umfasst, der, wenn er auf der Verarbeitungsschaltung (210) eines zentralen Knotens (200) ausgeführt wird, den zentralen Knoten (200) veranlasst zum:
Anweisen (S102) der Vielzahl von APs (110a: 110K), eine bidirektionale Sondierung für den zentralen Knoten (200) durchzuführen, um Messungen an Referenzsignalen zur Kalibrierung zu erhalten, indem die Referenzsignale zur Kalibrierung drahtlos untereinander ausgetauscht werden, wobei jeder der Vielzahl von APs (110a: 110K) angewiesen wird, ein erstes jeweiliges Referenzsignal zur Kalibrierung drahtlos zu übertragen, wobei mindestens ein erster AP (110a) aus der Vielzahl von APs (110a: 110K) angewiesen wird, ein zweites jeweiliges Referenzsignal zur Kalibrierung drahtlos zu übertragen;
Schätzen (S104) der Kanaldrift anhand von Messungen, die an dem ersten jeweiligen Referenzsignal, wie es von dem ersten AP (110a) übertragen und von einem zweiten AP (110b) aus der Vielzahl von APs (110a: 110K) empfangen wird, und an dem zweiten jeweiligen Referenzsignal, wie es von dem ersten AP (110a) übertragen und von dem zweiten AP (110b) empfangen wird, vorgenommen wurden; und
Durchführen (S108) einer Kanaldriftkompensation zur Kalibrierung der APs (110a: 110K) basierend auf bidirektionalen Messungen, die während der bidirektionalen Sondierung an den ausgetauschten Referenzsignalen vorgenommen wurden, sowie auf der geschätzten Kanaldrift.

15. Computerprogrammprodukt (810), umfassend ein Computerprogramm (820) nach Anspruch 14 und ein computerlesbares Speichermedium (830), auf dem das Computerprogramm gespeichert ist.

## Revendications

1. Procédé pour estimer une dérive de canal entre une pluralité de points d'accès, AP, (110a : 110K) dans un réseau distribué à entrées multiples, sortie multiples, D-MIMO, (100), le procédé étant réalisé par un nœud centralisé (200) dans le réseau D-MIMO (100), le procédé comprenant :
l'instruction (S102) à la pluralité d'AP (110a : 110K) d'effectuer un sondage bidirectionnel pour le nœud centralisé (200) pour obtenir des mesures sur des signaux de référence pour un étalonnage en échangeant sans fil les signaux de référence pour un étalonnage entre eux, dans lequel chaque AP de la pluralité d'AP (110a : 110K) a reçu pour instruction de transmettre sans fil un premier signal de référence respectif pour un étalonnage, dans lequel au moins un premier PA (110a) de la pluralité d'AP (110a : 110K) a reçu pour instruction de transmettre sans fil un second signal de référence respectif pour un étalonnage ;
l'estimation (S104) de la dérive de canal à partir de mesures réalisées sur le premier signal de référence respectif au fur et à mesure qu'il est transmis par le premier AP (110a) et reçu par un second AP (110b) de la pluralité d'AP (110a : 110K) et sur le second signal de référence respectif au fur et à mesure qu'il est transmis par le premier AP (110a) et reçu par le second AP (110b) ; et
la réalisation (S108) d'une compensation de dérive de canal pour étalonner les AP (110a : 110K) sur la base de mesures bidirectionnelles réalisées pendant le sondage bidirectionnel sur les signaux de référence échangés et sur la dérive de canal estimée.

2. Procédé selon la revendication 1, dans lequel la dérive de canal est définie par l'une quelconque, ou n'importe quelle combinaison :
d'une dérive de phase entre le premier signal de référence au fur et à mesure qu'il est reçu par le second AP (110b) et le second signal de référence au fur et à mesure qu'il est reçu par le second AP (110b), et/ou
d'une dérive d'amplitude entre le premier signal de référence au fur et à mesure qu'il est reçu par le second AP (110b) et le second signal de référence au fur et à mesure qu'il est reçu par le second AP (110b).

3. Procédé selon une quelconque des revendications précédentes, dans lequel le procédé comprend en outre :
la vérification (S106) que la dérive de canal estimée est supérieure à une première valeur seuil mais inférieure à une seconde valeur seuil avant d'effectuer la compensation de dérive de canal.

4. Procédé selon l'une quelconque des revendications précédentes, dans lequel chacun des signaux de référence pour un étalonnage est transmis à une instance de temps de transmission respective, et dans lequel la réalisation de la compensation de dérive de canal comprend :
la détermination (S108a) d'au moins une référence d'alignement temporel sur la base des instances de temps de transmission des signaux de référence pour un étalonnage.

5. Procédé selon la revendication 4, dans lequel la au moins une référence d'alignement temporel est déterminée comme une moyenne des instances de temps de transmission des signaux de référence pour un étalonnage.

6. Procédé selon la revendication 4 ou 5, dans lequel la réalisation de la compensation de dérive de canal comprend :
la détermination (S108b) de facteurs de compensation de dérive de canal sur la base de la au moins une référence d'alignement temporel ; et
l'obtention (S108c) de mesures bidirectionnelles compensées en appliquant les facteurs de compensation de dérive de canal à au moins certaines des mesures bidirectionnelles.

7. Procédé selon la revendication 6, dans lequel les facteurs de compensation de dérive de canal sont déterminés sur la base des mesures bidirectionnelles.

8. Procédé selon l'une quelconque des revendications 6 à 7, dans lequel les facteurs de compensation de dérive de canal sont déterminés par un n:th ajustement par régression des mesures bidirectionnelles.

9. Procédé selon l'une quelconque des revendications 6 à 7, dans lequel les facteurs de compensation de dérive de canal sont déterminés par régression linéaire des mesures bidirectionnelles.

10. Procédé selon l'une quelconque des revendications 6 à 9, dans lequel le procédé comprend en outre :
l'application (S110) de coefficients d'étalonnage déterminés à partir des mesures bidirectionnelles compensées.

11. Procédé selon une quelconque revendication précédente, dans lequel le premier AP (110a) a reçu par le nœud centralisé (200) pour instruction de multiplexer temporellement la transmission du premier signal de référence pour un étalonnage et la transmission du second signal de référence pour un étalonnage.

12. Nœud centralisé (200) pour estimer une dérive de canal entre une pluralité de points d'accès, AP, (110a : 110K) dans un réseau distribué à entrées multiples, à sorties multiples, D-MIMO, (100), le nœud centralisé (200) comprenant un ensemble de circuits de traitement (210), l'ensemble de circuits de traitement étant configuré pour amener le nœud centralisé (200) à :
ordonner à la pluralité d'AP (110a : 110K) d'effectuer un sondage bidirectionnel pour le nœud centralisé (200) pour obtenir des mesures sur des signaux de référence pour un étalonnage en échangeant sans fil les signaux de référence pour un étalonnage entre eux, dans lequel chaque AP de la pluralité d'AP (110a : 110K) a reçu pour instruction de transmettre sans fil un premier signal de référence respectif pour un étalonnage, dans lequel au moins un premier AP (110a) de la pluralité d'AP (110a : 110K) a reçu pour instruction de transmettre sans fil un second signal de référence respectif pour un étalonnage ;
estimer la dérive de canal à partir de mesures réalisées sur le premier signal de référence respectif au fur et à mesure qu'il est transmis par le premier AP (110a) et reçu par un second AP (110b) de la pluralité d'AP (110a : 110K) et sur le second signal de référence respectif au fur et à mesure qu'il est transmis par le premier AP (110a) et reçu par le second AP (110b) ; et
effectuer une compensation de dérive de canal pour étalonner les AP (110a : 110K) sur la base de mesures bidirectionnelles réalisées pendant le sondage bidirectionnel sur les signaux de référence échangés et sur la dérive de canal estimée.

13. Nœud de réseau (200) selon la revendication 12 qui est en outre configuré pour réaliser le procédé selon l'une quelconque des revendications 2 à 11.

14. Programme informatique (820) pour estimer une dérive de canal entre une pluralité de points d'accès, AP (110a : 110K), dans un réseau distribué à entrées multiples, à sorties multiples, D-MIMO (100), le programme d'ordinateur comprenant un code d'ordinateur qui, lorsqu'il est exécuté sur un ensemble de circuits de traitement (210) d'un nœud centralisé (200), amène le nœud centralisé (200) à :
ordonner (S102) à la pluralité d'AP (110a : 110K) d'effectuer un sondage bidirectionnel pour le nœud centralisé (200) pour obtenir des mesures sur des signaux de référence pour un étalonnage en échangeant sans fil les signaux de référence pour un étalonnage entre eux, dans lequel chaque AP de la pluralité d'AP (110a : 110K) a reçu pour instruction de transmettre sans fil un premier signal de référence respectif pour un étalonnage, dans lequel au moins un premier AP (110a) de la pluralité d'AP (110a : 110K) a reçu pour instruction de transmettre sans fil un second signal de référence respectif pour un étalonnage ;
estimer (S104) la dérive de canal à partir de mesures réalisées sur le premier signal de référence respectif au fur et à mesure qu'il est transmis par le premier AP (110a) et reçu par un second AP (110b) de la pluralité d'AP (110a : 110K) et sur le second signal de référence respectif au fur et à mesure qu'il est transmis par le premier AP (110a) et reçu par le second AP (110b) ; et
effectuer (S108) une compensation de dérive de canal pour étalonner les AP (110a : 110K) sur la base de mesures bidirectionnelles réalisées pendant le sondage bidirectionnel sur les signaux de référence échangés et sur la dérive de canal estimée.

15. Produit de programme informatique (810) comprenant un programme informatique (820) selon la revendication 14, et un support de stockage lisible par ordinateur (830) sur lequel le programme d'ordinateur est stocké.
